# EUROPÄISCHE PATENTANMELDUNG

(11) **EP 2 241 181 A1**
(43) Veröffentlichungstag der Anmeldung: **20.10.2010**
(21) Anmeldenummer: 10002889.3
(22) Anmeldetag: 18.03.2010
(51) Int. Cl.: A01K 15/00

(54) **Vorrichtung zur Kontrolle des Jagd- und/oder Fluchtverhaltens von domestizierten Tieren**

(30) Priorität: 26.03.2009 DE 102009015141
(71) Anmelder: Lohe, Martin, 68600 Weckolsheim (FR)
(72) Erfinder: Lohe, Martin, 68600 Weckolsheim (FR)
(74) Vertreter: Prietsch, Reiner

(57) **Zusammenfassung**

Eine Vorrichtung zur Kontrolle des Jagd- und/oder Fluchtverhaltens von domestizierten Tieren, insbesondere von Hunden, umfasst einen am Kopf des Tieres in dessen Stirnbereich befestigbaren Bügel (1), an dem ein undurchsichtiges Visier (2) zwischen einer ersten, die Sicht des Tieres nicht beeinträchtigenden Stellung und einer zweiten, dem Tier die Sicht nehmende Stellung schwenkbar befestigt ist und einen an dem Bügel (1) befestigten, von dem Empfänger gesteuerten Antrieb (6) zum Schwenken des Visiers (2).

## Beschreibung

Die Erfindung betrifft eine Vorrichtung zur Kontrolle des Jagd- oder Fluchtverhaltens von domestizierten Tieren, insbesondere von Hunden, bestehend aus einer an dem Kopf des Tieres anbringbaren, undurchsichtigen Abdeckung, die nach Fernauslösung über einen batteriegespeisten Empfänger dem Tier die Sicht nimmt.

Eine derartige Vorrichtung ist aus der DE-A-101 14 631 bekannt. Sie besteht aus einem Spezialhalsband, das einen zusammengefalteten, doppelwandigen und undurchsichtigen Kunststofftrichter, eine Druckgaspatrone und einen dessen Ventil betätigenden Funkempfänger umfasst. Wenn das Ventil, ausgelöst durch ein Funksignal, öffnet, strömt Gas in den Raum zwischen den Wänden des doppelwandigen Kunststofftrichters, so dass dieser sich nach vorn, über den Kopf des Tieres hinweg entfaltet und dem Tier damit die Sicht nimmt, so dass das jagende oder flüchtende Tier stehen bleiben muss. Diese Vorrichtung ist in mehrfacher Hinsicht unbefriedigend. Wenn sich das Halsband verdreht, was in der Praxis unvermeidbar ist, ist die Funktion nicht gewährleistet. Die Gaspatrone eignet sich nur zum einmaligen Gebrauch. Auf das zischende Geräusch des ausströmenden Gases können Tiere, insbesondere Hunde, aggressiv oder ängstlich reagieren, so dass sie sich dem erneuten Umlegen eines derartigen Halsbandes widersetzen. Desweiteren sind keine geeigneten Ventile verfügbar. Das Zusammenfalten des "aufgeblasenen" Trichters ist mühselig.

Aus der US-B-6 311 645 ist eine an einem Halsband zu befestigende Brille bekannt, deren Gläser aus einem elektrooptischen Material bestehen, das normalerweise transparent ist und bei Anlegen einer Spannung opak wird. Der hierzu erforderliche Schalter wird im Bedarfsfall ferngesteuert geschlossen. In der Regel tolerieren die Tiere eine derartige Brille nicht, sondern versuchen, sie abzuschütteln oder abzustreifen. Unabhängig davon muss die Brille über relativ stramme Bänder mit dem Halsband verbunden werden, damit sie ausreichend fest sitzt. Aus dem gleichen Grund muss das Halsband eng verschnallt werden. Dadurch werden die Kopffreiheit, die Atemwege und die Speiseröhre eingeengt.

Der Erfindung liegt die Aufgabe zugrunde, eine Vorrichtung der eingangs genannten Art zu schaffen, die die vorgenannten Nachteile vermeidet.

Die Lösung umfasst einen im Stirnbereich des Tieres befestigbaren Bügel, an dem ein undurchsichtiges Visier zwischen einer ersten, die Sicht des Tieres nicht beeinträchtigenden Stellung und einer zweiten, dem Tier die Sicht nehmenden Stellung schwenkbar festgelegt ist sowie einen an dem Bügel befestigten, von dem Empfänger gesteuerten Antrieb zum Schwenken des Visiers.

Die Vorrichtung lässt sich zum überwiegenden Teil aus Kunststoff herstellen, hat daher ein verhältnismäßig geringes Gewicht und kann ausreichend sicher am Kopf des Tieres befestigt werden, ohne das Tier und insbesondere dessen Kopffreiheit nennenswert zu behindern. Bei der Aktivierung, das heißt beim ferngesteuerten Schwenken des Visiers in dessen zweite Stellung, entstehen keine beängstigenden Geräusche. Der Tierhalter kann das Visier ohne Aufwand in die erste oder Ausgangsstellung zurückbringen.

Eine bevorzugte Ausführungsform der Vorrichtung, die für Hunde bestimmt ist, zeichnet sich dadurch aus, dass der Bügel mittig einen Wulst hat, der an die Form der anatomischen Vertiefung im Stirnbeinbereich des Hundes angepasst ist. Diese rinnenartige Vertiefung ist allen Hunderassen gemeinsam, beginnt im oberen Stirnbereich und hat ihre breiteste und tiefste Stelle etwa in Höhe einer gedachten Linie zwischen den beiden inneren Augenwinkeln (cantus medialus). Durch Ausnutzung dieser anatomischen Besonderheit wird ein sehr sicherer Sitz der Vorrichtung erreicht.

Der Bügel kann z.B. mittels eines verstellbaren Bandes, das um den Unterkiefer des Tieres verläuft, befestigt sein. Eine zusätzliche Verbindung z.B. mit einem Brustgeschirr ist möglich.

Bevorzugt hat das Visier mittig eine an die gewölbte Form des Oberkiefer/Nasen-Bereichs des Kopfes des Tieres angepasste Ausnehmung, die sicherstellt, dass das Visier dem Tier die Sicht auch schräg nach unten nimmt. Der Rand der Ausnehmung kann z.B. gepolstert sein.

Das Visier ist an seinen beiden Enden mit dem Bügel am besten über Drehzapfen schwenkbar verbunden. Der Antrieb kann aus mindestens einem Kleinstmotor im Bereich einer der Drehzapfen bestehen. Gegenüber kann ein identischer, zweiter Kleinstmotor vorgesehen sein. Der Motor oder die Motore werden am besten aus der gleichen Batterie versorgt, die auch den Empfänger speist. Als Motor eignen sich sowohl Gleichstrommotore mit integriertem Untersetzungsgetriebe als auch Schrittmotore, deren Steuerlogik in den Empfänger integriert sein kann. In beiden Ausführungen sind die Motore reversierbar, um das Visier aus seiner zweiten in seine erste oder Ausgangsstellung zurückzubringen. Alternativ kann das Visier mit dem Bügel über eine oder über beidseitige Rutschkupplungen verbunden sein, die eine Rückstellung von Hand ermöglichen.

Es ist vorteilhaft, den Antrieb, also z.B. den Kleinstmotor, zur Schonung der Batterie in jeder der beiden Endlagen des Visiers stromlos zu schalten.

Es empfiehlt sich auch, den Bügel mit mindestens einem den Schwenkwinkel des Visiers begrenzenden Anschlag auszustatten, insbesondere in der zweiten Stellung, bei der anderenfalls die Gefahr besteht, dass der Unterrand des Visiers auf den Nasenrücken des Tieres drückt.

Die Vorrichtung nach der Erfindung wird nachfolgend anhand der ein Ausführungsbeispiel für einen Hund mittlerer Größe darstellenden Zeichnung näher erläutert. Es zeigt:
- Fig. 1:: die Vorrichtung in der normalen oder ersten Stellung
- Fig. 2:: die gleiche Vorrichtung in einer Isometrie
- Fig. 3:: die Vorrichtung in der zweiten oder aktivierten Stellung
- Fig. 4:: den Kopf eines Hundes zur Erläuterung der Ver- tiefung im Stirnbeinbereich
- Fig. 5:: die Vorrichtung in der ersten Stellung auf dem Kopf eines Hundes und
- Fig. 6:: die Vorrichtung in der zweiten Stellung auf dem Kopf des gleichen Hundes.

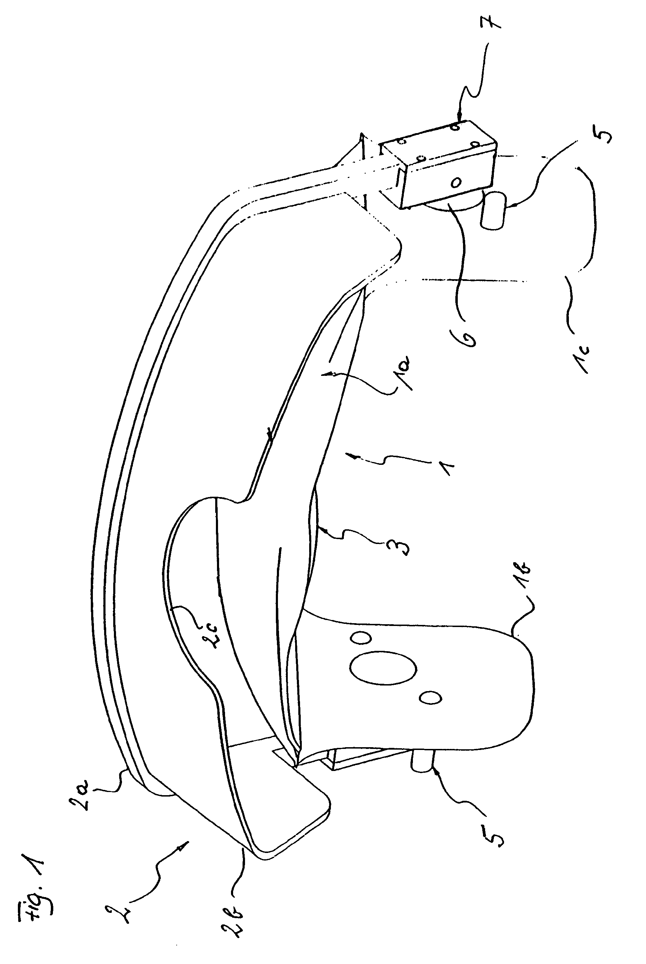

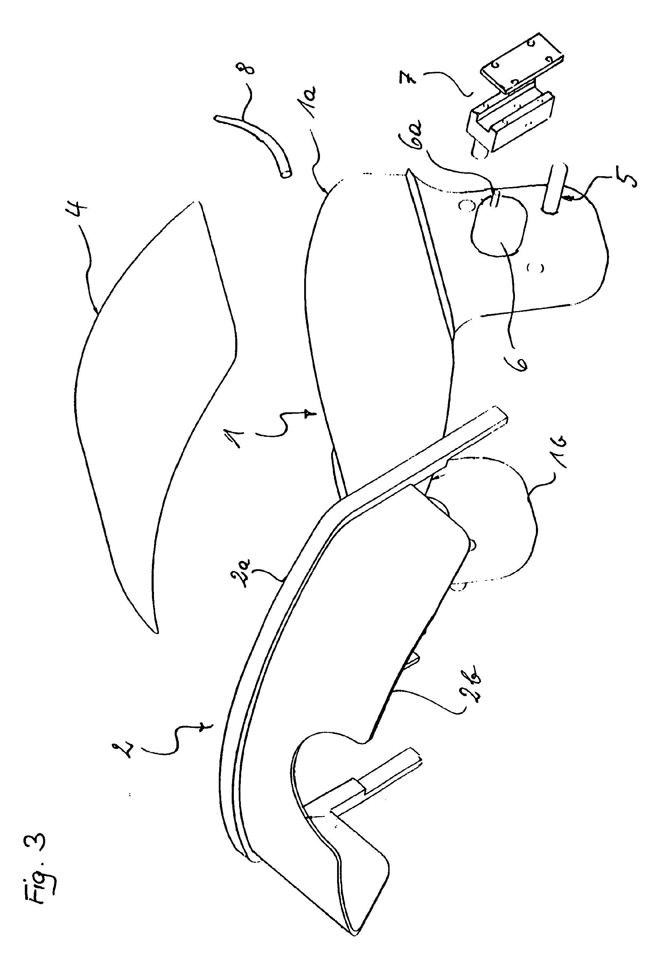

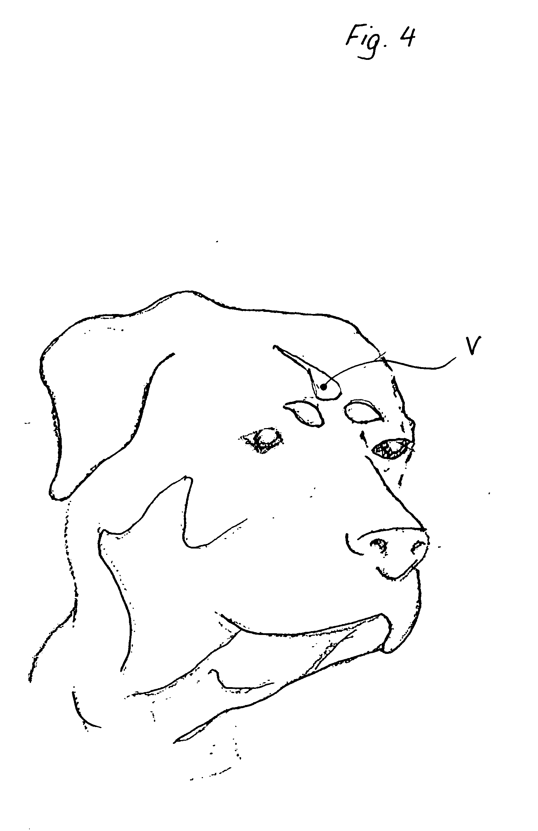

Die in den Figuren 1 bis 3 dargestellte Vorrichtung besteht aus einem am besten einstückigen Bügel 1, der einen Mittelsteg 1a sowie zwei dazu etwa rechtwinklige Seitenteile 1b und 1c hat. An dem Mittelsteg 1a befindet sich nahe dem Vorderrand ein nach unten vorspringender Wulst 3, der an die rinnen- oder muldenartige Vertiefung V angepasst ist, die, unabhängig von der Rasse, bei jedem Hundeschädel vorhanden und näherungsweise in Fig. 4 dargestellt ist.

An den Seitenteilen 1b, 1c des Bügels 1 ist ein Visier 2 schwenkbar angelenkt, das einen gebogenen Profilstab 2a und, an diesem befestigt, eine undurchsichtige Kunststoffscheibe 2b umfasst. Diese hat mittig eine Ausnehmung 2c, die an die Form des Oberkiefer/Nasen-Bereiches des Hundes angepasst ist, ebenso wie alle vorgenannten Teile der Vorrichtung für die Schädel- bzw. Kopfform der jeweiligen Hunderasse bemessen sind.

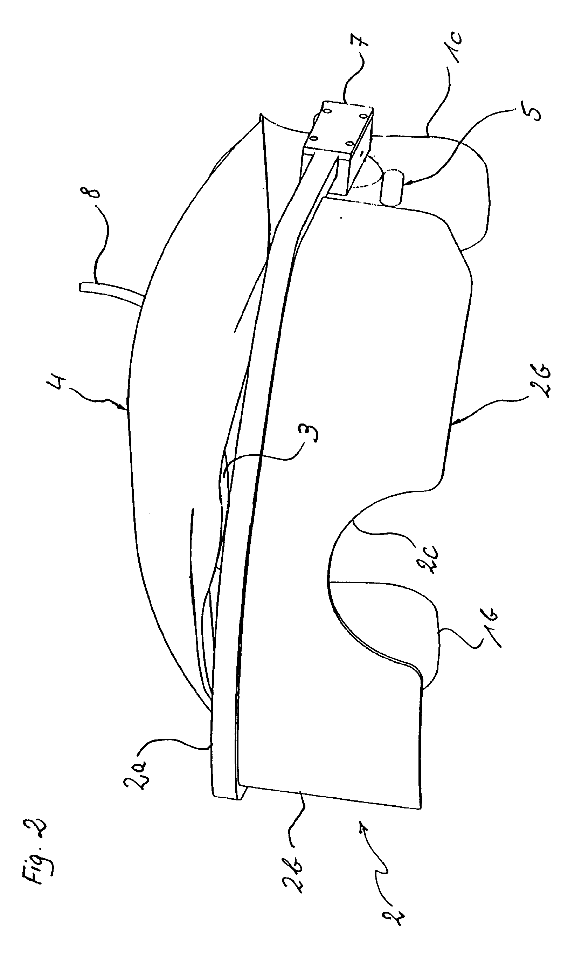

Der Profilstab 2a endet an den Seitenteilen 1b, 1c des Bügels 1 in Lagerklötzen, von denen nur der rechtsseitige Lagerklotz 7 zu sehen und der linksseitige Lagerklotz weitgehend verdeckt ist. Auf dem Seitenteil 1c ist ein Kleinstmotor 6 montiert, der mit einem Untersetzungsgetriebe zusammengebaut ist, das einen Exzenterzapfen 6a antreibt, der im Eingriff mit dem Lagerklotz 7 steht, um das Visier 2 zwischen der ersten Stellung gemäß Fig. 1 und der zweiten Stellung gemäß Fig. 2 zu bewegen. Die Lagerklötze können an ihrem jeweiligen Seitenteil zusätzlich über Drehzapfen oder andere Führungsmittel schwenkbar gelagert und/oder geführt sein (nicht dargestellt).

Der Motor 6 und gegebenenfalls ein zweiter, auf dem anderen Seitenteil 1b des Bügels 1 angeordneter, gleichartiger Motor, wird über einen üblichen Fernsteuerempfänger gesteuert, von dem nur dessen Antenne 8 dargestellt ist und der zusammen mit einer Batterie auf dem Mittelsteg 1a des Bügels 1 unter einer Abdeckung 4 Platz findet. Der Fernsteuerempfänger und die Batterie sind nicht dargestellt, weil dafür zahlreiche geeignete Ausführungen im Handel sind.

Zur Begrenzung der Endstellungen tragen beide Seitenteile 1b und 1c des Bügels 1 die angedeuteten Endanschläge in Form von Stiften 5.

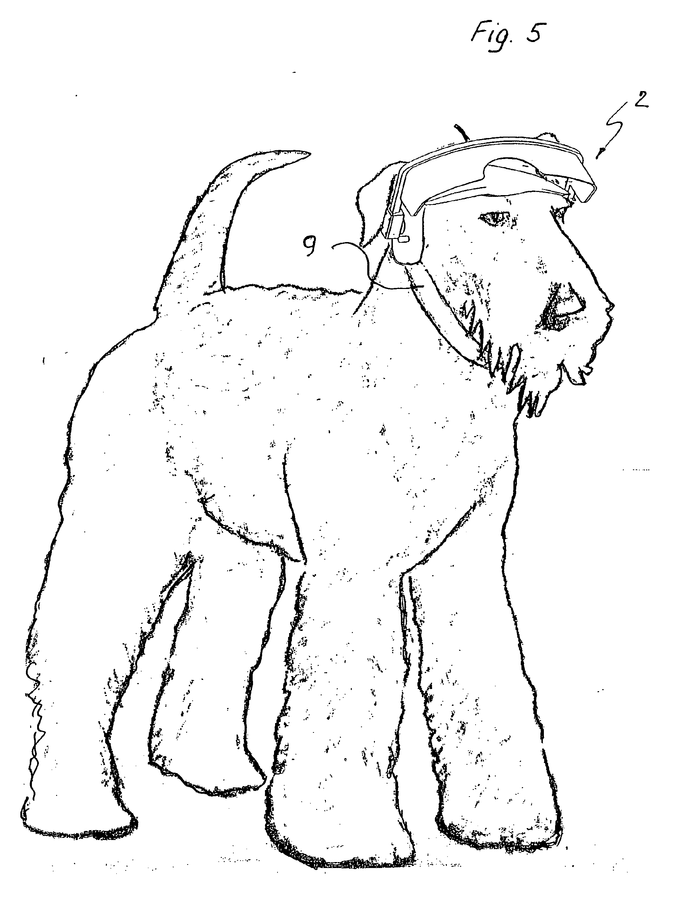

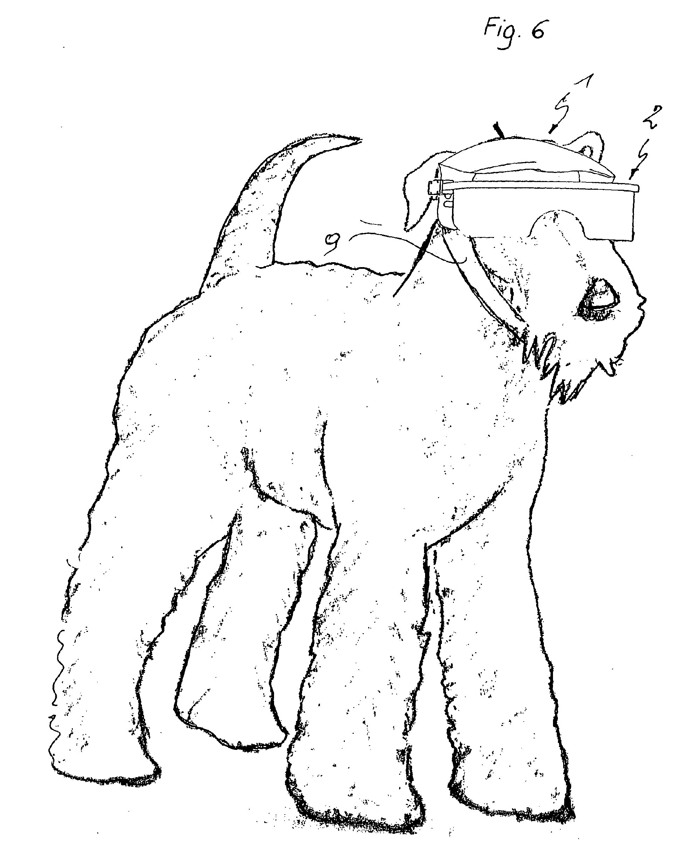

Die Figuren 5 und 6 zeigen einen Hund, der mit der Vorrichtung nach der Erfindung ausgestattet ist. Die Vorrichtung ist unter dem Unterkiefer des Hundes hindurch über ein Band 9 fixiert. In der Fig. 5 befindet sich die Vorrichtung in ihrer ersten oder Normalstellung, in Fig. 6 in ihrer zweiten oder aktivierten Stellung, in der sie nach Fernauslösung dem Hund die Sicht nimmt und diesen dadurch zum Stehen bringt.

Die Fernauslösung kann wie üblich über Funk oder einen Infrarotsender erfolgen. Auch eine akustische Auslösung ist möglich. Der Empfänger ist selbstverständlich auf das Übertragungsprinzip abgestimmt.

## Patentansprüche

1. Vorrichtung zur Kontrolle des Jagd- und/oder Fluchtverhaltens von domestizierten Tieren, insbesondere von Hunden, bestehend aus einer an dem Kopf des Tieres anbringbaren, undurchsichtigen Abdeckung, die nach Fernauslösung über einen batteriegespeisten Empfänger dem Tier die Sicht nimmt, **gekennzeichnet durch** einen im Stirnbereich des Tieres befestigbaren Bügel (1), an dem ein undurchsichtiges Visier (2) zwischen einer ersten, die Sicht des Tieres nicht beeinträchtigenden Stellung und einer zweiten, dem Tier die Sicht nehmenden Stellung schwenkbar befestigt ist und **durch** einen an dem Bügel (1) befestigten, von dem Empfänger gesteuerten Antrieb (6) zum Schwenken des Visiers (2).

2. Vorrichtung nach Anspruch 1, für Hunde, **dadurch gekennzeichnet, dass** der Bügel (1) mittig einen Wulst (3) hat, der an die Form der anatomischen Vertiefung im Stirnbeinbereich des Hundes angepasst ist.

3. Vorrichtung nach Anspruch 1 oder 2, **dadurch gekennzeichnet, dass** der Bügel (1) mittels eines verstellbaren Bandes (9) an dem Kopf des Tieres befestigbar ist.

4. Vorrichtung nach einem der Ansprüche 1 bis 3, **dadurch gekennzeichnet, dass** das Visier (2) mittig eine an die gewölbte Form des Oberkiefer/Nasen-Bereichs des Kopfes des Tieres angepasste Ausnehmung (2c) hat.

5. Vorrichtung nach einem der Ansprüche 1 bis 4, **dadurch gekennzeichnet, dass** der Antrieb aus einem elektrischen Kleinstmotor (6) besteht.

6. Vorrichtung nach einem der Ansprüche 1 bis 5, **dadurch gekennzeichnet, dass** der Bügel (1) mindestens einen den Schwenkwinkel des Visiers (2) begrenzenden Anschlag (5) hat.
